# EUROPÄISCHE PATENTSCHRIFT

(11) **EP 4 159 424 B1**
(45) Veröffentlichungstag und Bekanntmachung des Hinweises auf die Patenterteilung: **10.12.2025**
(21) Anmeldenummer: 22195030.6
(22) Anmeldetag: 12.09.2022
(51) Int. Cl.: B29D 29/08, B29C 33/62, B29C 33/68, B32B 25/08, B32B 25/14, B32B 27/32, B32B 27/34

(54) **VERFAHREN ZUR HERSTELLUNG VON PROFILIERTEN ENDLOSRIEMEN UNTER VERWENDUNG VON MINDESTENS ZWEISCHICHTIGEN DEHNBAREN TRENNFOLIEN, UND ENTSPRECHEND HERGESTELLTE VERBUNDPRODUKTE**
METHOD FOR PRODUCING PROFILED ENDLESS BELTS USING AT LEAST TWO-LAYER EXTENSIBLE SEPARATOR FILMS, AND COMPOSITE PRODUCTS PRODUCED ACCORDINGLY
PROCÉDÉ DE FABRICATION DE COURROIES SANS FIN PROFILÉES AU MOYEN DE FEUILLES DE SÉPARATION EXTENSIBLES À AU MOINS DEUX COUCHES, ET PRODUITS COMPOSITES AINSI OBTENUS

(30) Priorität: 30.09.2021 DE 102021210962
(43) Veröffentlichungstag der Anmeldung: 05.04.2023
(73) Patentinhaber: ContiTech Deutschland GmbH, 30175 Hannover (DE)
(72) Erfinder: Schulte, Hermann, 30165 Hannover (DE); Bleeke, Jan, 30165 Hannover (DE); Dr. Teves, Reinhard, 30165 Hannover (DE); Tusche, Marcel, 30165 Hannover (DE)
(74) Vertreter: Preusser, Andrea

(56) Entgegenhaltungen:
- DE-A1- 102008 012 044
- DE-A1- 102019 212 077
- DE-T5- 112014 001 531
- US-A1- 2002 187 869
- US-A1- 2012 049 400

## Beschreibung

Die vorliegende Erfindung betrifft Verfahren zur Herstellung von profilierten Endlosriemen unter Verwendung von mindestens zweischichtigen und zweckmäßig dehnbaren Trennfolien, bei denen die zweischichtige dehnbare Trennfolie zur Vermeidung eines Anhaftens von Material des Endlosriemens am Formwerkzeug, mit Hilfe dessen die Profilierung des Riemens gebildet wird, wirksam ist. Die vorliegende Erfindung betrifft weiterhin Verbundprodukte aus profilierten Endlosriemen und entsprechenden mindestens zweischichtigen Folien, die über ein solches Verfahren herstellbar oder hergestellt sind, sowie die Verwendung solcher zweischichtiger Trennfolie zur Unterdrückung und/oder Vermeidung des Anhaftens von Elastomerformteilen an für deren Herstellung verwendeten Formwerkzeugen.

### Stand der Technik

Zahnriemenwickel werden heute üblicherweise auf gezahnten Stahltrommeln angefertigt und vulkanisiert. Anschließend müssen die geheizten Wickel von den Stahlformen abgelöst werden, wofür der Reibbeiweit des Gummiwickels in Bezug auf die Stahlform geringer sein muss als der Reibwert der außen angreifenden Stripperbacken in Richtung Riemen/Wickelrücken. Um den Reibbeiwert zwischen Zahnriemenwickel und der Stahlform entsprechend abzustimmen und zu reduzieren, wird die Form üblicherweise mit einem Trennmittel eingesprüht.

Herkömmlich werden Zahnriemen trocken laufend eingesetzt, beispielsweise zur Übertragung der Drehbewegung von der Kurbel- auf die Nockenwelle im Verbrennungsmotor. Neuerdings kommen Zahnriemen aber vermehrt auch unter Öl zum Einsatz (wo sie auch als Belt in oil ("BIO") Riemen bezeichnet werden), und können auf diese Weise beispielsweise auch Steuerketten in diesen Anwendungen ersetzen.

Zahnriemen weisen üblicherweise einen elastischen Grundkörper und ein Gewebe auf der Kraftübertragungsseite, insbesondere auf der Zahnoberfläche, auf. Der elastische Grundkörper ist meist ein Vulkanisat auf Basis von Elastomeren (insbesondere vollvernetzte Kautschukmischungen) und/oder thermoplastischen Elastomeren (insbesondere teilvernetzte thermoplastische Vulkanisate). Das Gewebe dient dazu, die Zähne vor Verschleiß zu schützen. Allerdings ist dabei das Gewebe bei Beanspruchung wiederum Abrieb- und Verschleißbelastungen ausgesetzt.

Traditionell wird daher versucht, einen möglichst kleinen Reibbeiwert zwischen der Zahnriemenoberfläche und der im Kontakt befindlichen Riemenscheibe zu erreichen, um auf diese Weise die Abrieb- und Verschleißbelastungen zu verringern. Ein geringer Reibbeiwert bewirkt, dass beim Einformen des Zahns in die Scheibe weniger Energie verbraucht wird und dass Reibung, die durch das Bewegen der Scheibe zwischen den Riemenzähnen auftritt, nicht zu Abrieb und Verschleiß führt. Dazu wird der Zahnriemen entweder ohne eine Beschichtung ausgeführt oder aber mit einer elastischen Beschichtung versehen, die gute Gleiteigenschaften aufweist. Dies wird durch die Verwendung eines entsprechenden Gleitmittels bzw. Gleitkörpers erreicht.

Eine neuere Entwicklung stellen Belt in oil Riemen mit einer gummierten Oberfläche dar, die dadurch einen vergleichsweise hohen Reibwert zwischen Zahnriemen und Stahlform haben. Derartige Zahnriemen sind z.B. in der DE 10 2019 212 077 A1 beschrieben, bei denen das im Zahnriemen innen (auf den Zähnen) aufliegende Textilauflage mit einer Elastomerbeschichtung aus mindestens 60 phr eines Elastomers, 3 bis 100 phr eines Füllstoffes mit einer spezifischen Oberfläche (BET) von mindestens 50 m²/g, und 3 bis 50 phr eines Reaktivverdünner beaufschlagt wird.

Bei solchen Zahnriemen mit gummierter Gewebeoberfläche stellt sich das Problem, dass die hergestellten Riemen nicht mehr ohne weiteres von konventionellen Produktionsmaschinen abgelöst werden können. Dies ist problematisch, da sich ein Riemenwickel, der nicht sauber von z.B. einer Stahlform abgezogen werden kann, verziehen kann. Dies kann einen unruhigen Riemenlauf zur Folge haben, der sind in unerwünschten Laufgeräuschen im Fertigprodukt zeigt und sich wahrscheinlich auch negativ auf die Haltbarkeit des Produkts auswirkt.

Die DE 10 2008 012044 A1 betrifft einen Zahnriemen mit einem elastischen Grundkörper aus polymerem Werkstoff und einem mit einer Schutzschicht versehenen Oberflächenbereich. Die Schutzschicht umfasst eine Schutzfolie aus einem polymeren Werkstoff, wobei die Schutzfolie mit dem Grundkörper einen dauerhaften Haftverbund bildet. Das Werkzeugformteil kann vorzugsweise mit einem Trennmittel versehen werden

Die US 2012 049400 A1 beschreibt ein Verfahren zur Herstellung eines Riemens. Hierbei wird zuerst ein Gemisch aus Polyimid, Phosphatester und einem Lösungsmittel auf eine rotierende Oberfläche aufgetragen. Diese Mischung wird dann erhitzt, um den Vernetzungsprozess zu starten. Nachdem der teilweise vernetzte Riemen von der Oberfläche entfernt wurde, wird der Riemen erneut auf eine höhere Temperatur erhitzt, um ihn vollständig zu vernetzen.

In Vorversuchen der Erfinder zeigte sich, dass ein Behandeln der Formmaschinen mit konventionellen flüssigen oder wachsartigen Trennmitteln, die vor der Herstellung der Riemenwickel auf die Formwerkzeuge aufgebracht werden, keine zufriedenstellenden Ergebnisse erbrachte. Eine Beschichtung der Metallformwerkzeuge mit Trennmitteln wie Blaulack, einem Trennlack aus dem Bereich der Luftfederproduktion, vermittelte eine leichte Entfernbarkeit der hergestellten Wickel nur für wenige Produktionsläufe. Danach waren die Trenneigenschaften nicht mehr ausreichend, um die hergestellten Wickel ohne die Gefahr eine Beschädigung von den Metallformwerkzeugen abziehen zu können. Einzig eine Beschichtung der Werkzeuge mit Teflon zeigte hier gute Ergebnisse in der Produktion, wobei sich allerdings aufgrund der Geometrie der Zähne der Erhalt einer einheitlichen Beschichtung aus äußerst schwierig herausstellte.

Die Aufgabe der vorliegenden Erfindung bestand vor diesem Hintergrund darin, ein Verfahren zur Herstellung von profilierten Endlosreimen vorzuschlagen, die auf ihrer einer Innenseite eine Elastomerbeschichtung aufweisen und bei denen die oben beschriebenen Nachteile bei der Verwendung von temporär (für jeden Arbeitsgang) eingebrachten Trennmitteln oder permanenten Trennmittelschichten auf den Formwerkzeugen vermieden werden.

### Beschreibung der Erfindung

Im Rahmen der im Kontext mit der vorliegenden Erfindung durchgeführten Untersuchungen wurde überraschend gefunden, dass die oben beschriebenen Probleme durch die Verwendung einer mindestens zweischichtigen Folie vermeiden werden können, wobei die Folie mindestens eine thermoplastische Kunststoffschicht und eine polymere Trennmittelschicht aufweist. Die thermoplastische Kunststoffschicht vermittelt dabei eine für die konventionelle Verarbeitung geeignete mechanische Festigkeit, die sicherstellt, dass die Folie während des Formens des Profils des Endlosreimens aus einem unprofilierten Ausgangsprodukt intakt bleibt. Die polymere Trennmittelschicht vermittelt auf der anderen Seite ausreichende Trenneigenschaften während der Herstellung des profilierten Endlosriemens. Im Rahmen des Herstellungsverfahrens wird aus den Ausgangsmaterialien zunächst ein Verbundprodukt aus den letztendlich herzustellenden profilierten Endlosriemen und der mindestens zweischichtigen Folie herstellt, dass nach Ablösen dieses Produkts von dem Formwerkzeug zur Herstellung des Endlosriemens in einen Endlosriemen mit innerer Elastomerschicht und eine mindestens zweischichtige Folie getrennt wird.

Die Erfindung betrifft ein Verfahren zur Herstellung eines elastomeren Artikels mit einer äußeren Elastomerschicht nach Anspruch 1, ein Verbundprodukt umfassend einen profilierten Endlosriemen nach Anspruch 11 und die Verwendung einer mindestens zweischichtigen Folie mit einer thermoplastischen Kunststoffschicht und einer polymeren Trennmittelschicht zur Unterdrückung und/oder Vermeidung des Anhaftens von Elastomerformteilen an für deren Herstellung verwendeten Formwerkzeugen nach Anspruch 12.

Gemäß einem ersten Aspekt betrifft die vorliegende Erfindung demzufolge ein Verfahren zur Herstellung eines profilierten Endlosriemens mit einer Elastomerbeschichtung auf der Innenseite, das die folgenden Schritte umfassend:
i) Auflegen einer mindestens zweischichtigen Folie mit einer thermoplastischen Kunststoffschicht und einer polymeren Trennmittelschicht auf eine Metallform, die das Negativ einer zu bildenden profilierten Struktur des Endlosriemens bildet, in der Weise, dass sich die polymere Trennmittelschicht in Kontakt mit der Metallform befindet;
ii) Auflegen einer mit einer Elastomerbeschichtung versehenen Textilauflage auf die zweischichtige Folie in der Weise, dass sich die Elastomerbeschichtung in Kontakt mit der zweischichtigen Folie befindet;
iii) gegebenenfalls, Auflegen von einem oder mehreren Zugträgern auf die mit einer Elastomerbeschichtung versehene Textilauflage;
iv) Aufbringen einer Elastomerschicht auf die mit einer Elastomerbeschichtung versehenen Textilauflage oder auf den oder die Zugträger;
v) gegebenenfalls, Auflegen einer Textilschicht auf die Elastomerschicht
vi) Vulkanisieren der Schichtkonstruktion unter verpressen des Elastomers der Elastomerschicht gegen die Metallform in der Weise, dass die Schichtkonstruktion ein der Metallform angepasstes Profil annimmt;
vii) Entnehmen des so hergestellten Endlosriemens aus der Metallform und abtrennen der zweischichtigen Folie von dem Zahnriemen.

Die "Innenseite" bezeichnet die Kraftübertragungsseite des Endlosriemens, d.h. diejenige Seite auf die über einen Antrieb Kraft auf den Endlosriemen übertragen wird.

"Profiliert" bezeichnet im Kontext der Anmeldung eine regelmäßig geformte nicht planare Oberfläche, die die der Regel mehrere Vorsprünge zur Erleichterung einer Kraftübertragung aufweist. Vorzugsweise handelt es sich bei dem Profil des profilierten Endlosriemens um Zähne, in diesem Fall liegt ein Endlosriemen mit "gezahntem Profil" vor.

Gemäß dem angegebenen Verfahren wird entsprechend in einer ersten Stufe eine Sandwichstruktur aus der mindestens zweischichtigen Folie, der mit einer Elastomerbeschichtung versehenen Textilauflage und einer Elastomerschicht hergestellt, die noch keine oder zumindest nicht die finale Profilstruktur des profilierten Endlosriemens ausweist. Im Rahmen des Vulkanisierens, bei dem die generierte Sandwichstruktur erhitzt wird, kommt es zu einem Erweichen des Elastomers (bevor dieses durch Vernetzung verfestigt wird) wobei dieses in die Profilierung der Metallform gedrückt wird, und so das spätere Profil ausgebildet wird. Zwischen dieser Metallform und dem Elastomer positioniertes Material aus Textilauflage, Elastomerbeschichtung und mindestens zweischichtiger Folie bildet dabei eine Zwischenschicht, wobei die direkt auf der Metallform positionierte Schicht aus dem polymeren Trennmittels einem Anhaften von Elastomer an der Metallform entgegenwirkt und die thermoplastische Kunststoffschicht eine geeignete mechanische Festigkeit bereitstellt, die alleine durch das polymere Trennmittel nicht bereitgestellt werden kann. Die thermoplastische Kunststoffschicht weist daher zweckmäßig eine geeignete mechanische Festigkeit auf, die sicherstellt, dass sich die Schicht unter thermischer und mechanischer Belastung verformen kann, ohne zu reißen. Damit hat die mindestens zweischichtige Folie im Verfahren der vorliegenden Erfindung einem mit einem dehnbaren Backpapier vergleichbare Funktion, bei der die thermoplastische Kunststoffschicht dem Trennmittel zugleich die gewünschte Dehnbarkeit und Stabilität vermittelt.

Die Figuren zeigen das Folgende:
Fig. 1 zeigt ein erfindungsgemäßes Verbundprodukt mit einer zweischichtigen Folie, bei der die polymere Trennmittelschicht die äußerste Schicht bildet
Fig. 2 zeigt ein erfindungsgemäßes Verbundprodukt mit einer dreischichtigen Folie, bei der die thermoplastische Kunststoffschicht von zwei äußeren Trennmittelschichten eingefasst wird

Wie erwähnt weist die thermoplastische Kunststoffschicht in dem erfindungsgemäßen Verfahren eine gute Dehnbarkeit auf, damit während der Herstellung des profilierten Endlosriemens Elastomer in die durch die Metallform bereitgestellten Hohlräume gedrückt werden kann, so dass diese vollständig ausgefüllt werden. Dabei kann die thermoplastische Kunststoffschicht ähnlich wie bei einem Tiefziehprozess gedehnt werden. Bevorzugt weist die thermoplastische Kunststoffschicht eine Dehnfähigkeit (bestimmt gemäß ISO 527) im Bereich von 50 bis 90% und besonders bevorzugt im Bereich von 70 bis 90% auf. Als Dehnfähigkeit von 50 % wird dabei die Fähigkeit der thermoplastischen Kunststoffschicht bezeichnet, sich unter den Verarbeitungsbedingungen (Temperatur von etwa 100°C bis 120°C) um 50% ihrer ursprünglichen Länge riss- und beschädigungsfrei ausdehnen zu können.

Die thermoplastische Kunststoffschicht der mindestens zweitschichtigen Folie beruht bevorzugt nicht auf demselben Polymer, dass in der Polymeren Trennmittelschicht als Trennmittel wirkt. Bevorzugt enthält die thermoplastische Kunststoffschicht als Polymer kein fluorhaltiges Polymer. Ganz besonders bevorzugt als Polymere in der thermoplastischen Kunststoffschicht sind wegen ihrer guten Dehnbarkeit und Weiterreißfestigkeit Polyamide, insbesondere in Form von Polyamid 6, Polyamid 4.6, Polyamid 12 oder Polyamid 6,6. Die thermoplastische Kunststoffschicht kann ganz aus einem oder mehreren thermoplastischen Polymer gebildet sein, oder zusätzlich noch weiter Komponenten enthalten.

Die polymere Trennmittelschicht der mindestens zweischichtigen Folie beruht vorzugsweise auf einem trennwirksamen fluorhaltigen Polymer oder Silikonpolymer und insbesondere auf Tetrafluorethylen oder einem Copolymer davon. Ein geeignetes Copolymer von Tetrafluorethylen ist beispielsweise Ethylentetrafluorethylen (ETFE). Die polymere Trennmittelschicht kann ganz aus dem trennwirksamen Polymer gebildet sein, oder zusätzlich noch weiter Komponenten enthalten. Bevorzugt ist es, wenn die polymere Trennmittelschicht zu mindestens 90 Gew.-% und insbesondere mindestens 95 Gew.-% aus einem oder mehreren trennwirksamen Polymeren besteht.

Hinsichtlich der Dicke unterliegt die mindestens zweischichtige Folie keinen relevanten Beschränkungen, wobei vor dem Hintergrund, dass die Folie nur als Hilfsmittel zur Herstellung der gewünschten profilierten Endlosriemen verwendet wird und am Ende als Abfallprodukt anfällt, ein Minimierung der eingesetzten Materialmenge anzustreben ist. Als geeignete Schichtdicke für die mindestens zweischichtige Folie kann hier eine Gesamtdicke im Bereich von 15 bis 40 µm und insbesondere 20 bis 30 µm angegeben werden.

Die Schichtdicke der Schicht aus dem polymeren Trennmittel ist so groß, dass die hergestellten profilierten Endlosriemen leicht und beschädigungsfrei von der Metallform geschoben werden können. Bevorzugt weist die Schicht aus dem polymeren Trennmittel eine Schichtdicke im Bereich von 5 bis 10 µm und insbesondere ausreichende 6 bis 8,5 µm auf.

Die optimale Schichtdicke der thermoplastischen Kunststoffschicht ist ebenfalls von den gewünschten Eigenschaften und dem thermoplastischen Material abhängig, aus dem die thermoplastische Kunststoffschicht gebildet ist. Vorzugsweise weist die thermoplastische Kunststoffschicht eine Schichtdicke im Bereich von 5 bis 20 µm und insbesondere 10 bis 16 µm auf.

Für die thermoplastische Kunststoffschicht ist es weiterhin bevorzugt, wenn sie eine Weiterreißfestigkeit (bestimmt gemäß ISO 6383-1 von mindestens 100 lbf/in, bevorzugt mindestens 140 lbf/in und weiter bevorzugt mindestens 180 lbf/in aufweist.

In einer ganz besonders bevorzugten Ausführungsform weist die mindestens zweischichtige Folie mindestens drei Schichten und insbesondere genau drei Schichten auf, wobei eine innere Schicht in Form einer thermoplastischen Kunststoffschicht vorliegt, und die Folie zwei äußere Schichten aufweist, die als polymeren Trennmittelschichten ausgeführt sind. Während eine Trennmittelschicht auf der Seite, die mit der Elastomerbeschichtung der Textilauflage in Kontakt steht, für eine Ablösbarkeit nicht unbedingt erforderlich ist, kann durch eine entsprechende Beschichtung ein anschließendes Ablösen der Folie von den hergestellten profilierten Endlosriemen erleichtert werden.

Eine insbesondere geeignete mindestens zweischichtige Folie ist eine dreischichtige Folie mit einem Aufbau ETFE/Polyamid 6/ ETFE mit einer Dicke im Bereich von 20 µm bis 30 µm.

In dem über das beschriebene Verfahren herzustellenden profilierten Endlosriemen befindet sich zwischen der Elastomerschicht und der Elastomerbeschichtung eine Textilauflage, wobei im Kontext der hier beschriebenen Erfindung unter Textilauflage Gewebe und Gewebe-ähnliche Materialien wie Gewirke, Gestricke oder Vliese verstanden werden.

Vorzugsweise umfasst die Textilauflage ein Gewebe aus einen Material, das ausgewählt ist aus der Gruppe bestehend aus Cellulose (insbesondere Baumwolle (CO), Viskose (CV), Flachs, Sisal, Hanf oder Leinen), Seide, Kaschmir, Rosshaar, Aramid (AR), Polyurethan (PU), Polybenzimidazol (PBI), Melamin (MEL), Polybenzoxazol (PBO), Kohlenstoff, Polyamid (PA) (insbesondere PA6.6, PA12, PA6), Polycarbonat (PC), Polyethylen (PE) (insbesondere UHMWPE), Polypropylen (PP), Polystyrol (PS), Polyacryl (PAN), Acetat (CA), Triacetat (CTA), Polyvinylalkohol (PVA), Polyamidimid (PAI), Polytrimethylenterephthalat (PTT), Polyimid (PI), Polybutylenterephthalat (PBT), Polytetrafluorethylen (PTFE), Polyphenylensulfid (PPS), Polyetheretherketon (PEEK), Polyester (PES) (insbesondere Polyethylenterephthalat (PET)) und Kombinationen davon, oder ist aus einem solchen Material gebildet. Besonders bevorzugt umfasst oder ist das Gewebe aus einem Material gebildet, das ausgewählt ist aus Aramid (AR), PA6.6, PA6, Polyethylenterephthalat (PET), Polyurethan (PU) und Kombinationen davon.

Die Textilauflage ist vorzugsweise ein Gewebe, das aus einem oder mehreren Garnen aus den vorstehend genannten Materialien hergestellt ist. Es können aber auch Mischfasergarne (z.B. bestehend aus Baumwoll- und Polyesterfasern) verwendet werden. Handelt es sich bei der Textilauflage um ein Vlies, kann dieser aus Fasern aus einem oder mehreren der vorstehend genannten Materialien bestehen.

Handelt es sich bei der Textilauflage um ein Gewirk oder Gestrick, ist es bevorzugt, dass wenigstens ein weiterer zusätzlicher Faden zur Stabilisierung des Gewirks oder Gestricks im Verarbeitungsprozess vorhanden ist. Als zusätzlicher Faden kann beispielsweise ein Polyurethanfaden (beispielsweise ein Elastangarn) eingesetzt werden. Der Vorteil der Verwendung eines zusätzlichen Fadens liegt darin, dass dadurch auch eine gewisse Längsdehnung erreicht kann. Dies ist gerade bei Zahnriemen vorteilhaft, da man bei diesen eine hohe Dehnbarkeit des Textils vor allem in der Längsrichtung (Umlaufrichtung) benötigt, um die Zähne ausformen zu können.

Die Elastomerbeschichtung umfasst vorzugsweise ein aus der Gruppe umfassend voll- oder teilhydrierten Nitrilkautschuk (HNBR), Acrylatkautschuk (ACM), Ethylen-Acrylatkautschuk (AEM), Polyurethan (PU), Urethanacrylat oder Kombinationen davon, bevorzugt aus voll- oder teilhydrierten Nitrilkautschuk (HNBR), Ethylen-Propyl-Dien-Mischpolymerisat-(EPDM), Acrylatkautschuk (ACM) oder einer Kombination davon ausgewähltes Elastomer. Vorzugsweise umfasst die Elastomerbeschichtung mindestens 60 phr eines aus den genannten Materialien ausgewählten Polymers oder eine Kombination davon (d.h. bis zu 40 phr werden durch andere Elastomere bereitgestellt). Weiter bevorzugt umfasst die Elastomerbeschichtung mindestens 80 phr und insbesondere mindestens 100 phr eines aus den genannten Materialien ausgewählten Polymers oder eine Kombination davon.

Die Elastomerbeschichtung kann zusätzlich weitere Bestandteile enthalten wie insbesondere Füllstoffe, bevorzugt in einer Menge von 3 bis 100 phr, und besonders bevorzugt 10 bis 40 phr, und/oder Reaktivverdünner bevorzugt in einer Menge von 3 bis 50 phr, und besonders bevorzugt 5 bis 30 phr. Besonders geeignete Füllstoffe und Reaktivverdünner sind z.B. in [0026] und [0027] der DE 10 2019 212 077 A1 beschrieben, deren Inhalt hierzu durch Bezugnahme in die Offenbarung dieser Anmeldung einbezogen wird.

Bevorzugt ist es auf der anderen Seite, dass Elastomerbeschichtung weniger als 40 phr an Gleitmitteln enthält. Durch die Verringerung der Menge an Gleitmitteln bzw. deren Vermeidung in der Elastomerbeschichtung wird der Reibbeiwert der zahnförmigen Kraftübertragungsseite erhöht, was vorteilhaft für Anwendungen eine spätere Verwendung der Riemen unter Öl ist. Gemäß einer bevorzugten Ausführungsform der vorliegenden Erfindung enthält die Elastomerbeschichtung weniger als 10 phr an Gleitmitteln, ganz besonders bevorzugt ist die Elastomerbeschichtung im Wesentlichen frei von Gleitmitteln, d.h. der Gehalt dieser beträgt weniger als 1 phr. Als Gleitmittel (auch als Gleitkörper bezeichnet) werden im Rahmen der vorliegenden Erfindung Additive verstanden, welche den Reibbeiwert der zahnförmigen Kraftübertragungsseite verringern. Gemäß einer bevorzugten Ausführungsform der vorliegenden Erfindung enthält die Elastomerbeschichtung weniger als 40 phr an Gleitmitteln, ausgewählt aus der Gruppe, bestehend aus fluorhaltigen Gleitmitteln wie Fluorpolymeren wie PTFE, PFA und PFPE, fluorfreien Gleitmitteln wie Molybdänsulfide, Graphite, Graphene, Talk, Glimmer, Bornitride, Silikone und Siloxanharze, und Kombinationen davon.

Die Elastomerbeschichtung kann weitere Komponenten enthalten, beispielsweise Alterungsschutzmittel oder Metallsalze einer ungesättigten Carbonsäure, vorzugsweise eines Zinksalzes einer ungesättigten Carbonsäure, oder Kombinationen davon. Gemäß einer bevorzugten Ausführungsform der vorliegenden Erfindung umfasst die Elastomerbeschichtung 20 bis 30 phr eines Metallsalzes einer ungesättigten Carbonsäure.

Die Elastomerbeschichtung ist vorzugsweise im Wesentlichen frei von fluorhaltigen Komponenten. Darunter wird im Rahmen der vorliegenden Erfindung verstanden, dass die Elastomerbeschichtung weniger als 1 Massen-% Fluor enthält.

Die Elastomerbeschichtung kann durch jedwedes dem Fachmann bekannten Vernetzungsmittel vernetzt sein. Bevorzugt handelt es sich bei der Vernetzung um eine radikalische Vernetzung, besonders bevorzugt unter Verwendung von organischen Peroxiden.

Die Textilauflage des erfindungsgemäß herzustellenden profilierten Endlosriemens kann weiterhin eine zusätzliche Beschichtung auf Basis von Resorcin-Formaldehyd-Latex (RFL) aufweisen, die als Haftbeschichtung das Anhaften der Textilauflage an den elastischen Grundkörper erleichtert bzw. verbessert.

Der über das beschriebe Verfahren herzustellende profilierte Endlosriemen weist vorzugsweise eine Zahnriemenform auf, kann aber auch in anderen Formen wie einer Keilriemen- oder Keilrippenriemenform oder einer Breitkeilriemenform ausgestaltet sein. Entsprechend kann das Profil gegen die Laufrichtung des profilierten Endlosriemens orthogonal ausgerichtete Zähnen mit eckiger Kontur oder orthogonal oder parallel ausgerichtete Zähne mit runder oder abgerundeter Kontur aufweisen. Grundsätzlich können mit dem hier beschriebene Verfahren insbesondere Zahnriemen, wie sie in der DE 10 2019 212 077 A1 beschreiben sind hergestellt werden, denen Offenbarung hiermit durch Bezugnahme in die Anmeldung aufgenommen wird.

Für das erfindungsgemäße Verfahren ist es nicht von relevanter Bedeutung, ob die einzelnen Komponenten sequentiell nacheinander, oder als SandwichAnordnung aus mehreren Bestandteilen der zweischichtigen Folie, der mit der Elastomerbeschichtung versehenen Textilauflage und der Elastomerschicht auf der Metallform angeordnet werden. Bevorzugt ist es zur Vereinfachung des Verfahrens aber, wenn die Schritte i) und ii) des Verfahrens simultan durchgeführt werden, indem ein Laminat aus der mindestens zweischichtigen Folie und der mit einer Elastomerbeschichtung versehenen Textilauflage auf die Metallform aufgelegt wird. Ein solches Laminat kann zuvor aus diesen Komponenten mit Hilfe üblicher Herstellungstechniken als Bahnware hergestellt werden.

Im Verfahren bildet die Elastomerschicht in den im Endeffekt hergestellten profilierten Endlosriemen einen elastischen Grundkörper. Als Elastomer wird dabei vorzugsweise mindestens ein thermoplastisches Elastomer oder thermoplastisches Vulkanisats verwendet. Unter einem Elastomer werden hier formfeste, aber elastisch verformbare Kunststoffe verstanden, deren Glasübergangspunkt sich unterhalb der Raum- bzw. Einsatztemperatur befindet. Das thermoplastische Vulkanisat liegt vorzugsweise in Form einer vulkanisierten Kautschukmischung vor, die mindestens eine Kautschukkomponente und ein oder mehrere Zusatzstoffe enthält. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), ChloroprenKautschuk (CR), Fluor-Kautschuk (FKM), Naturkautschuk (NR), Styrol-Butadien-Kautschuk (SBR), Polyurethan (PU) oder Butadien-Kautschuk (BR) eingesetzt, die unverschnitten oder mit wenigsten einer weiteren Kautschukkomponente, insbesondere mit einem der vorgenannten Kautschuktypen, verschnitten sind, beispielsweise in Form eines EPM/EPDM- oder SBR/BR-Verschnittes. Gemäß einer besonders bevorzugten Ausführungsform umfasst die Kautschukkomponente Ethylen-Propylen-Mischpolymerisat (EPM), Ethylen-Propylen-Dien-Mischpolymerisat (EPDM) oder einen Blend aus Ethylen-Propylen-Mischpolymerisat (EPM) und Ethylen-Propylen-Dien-Mischpolymerisat (EPDM) (auch als EPM/EPDM-Verschnitt bezeichnet).

Die Zusatzstoffe umfassen vorzugsweise wenigstens einen Vernetzer oder ein Vernetzersystem (Vernetzungsmittel und Beschleuniger). Wegen der besseren Wärmealterungsbeständigkeit werden bevorzugt Peroxide als Vernetzer eingesetzt. Weitere Zusatzstoffe sind zumeist noch Füllstoffe, Verarbeitungshilfsmittel, Weichmacher, Alterungsschutzmittel sowie gegebenenfalls weitere Zusatzstoffe, beispielsweise Fasern und Farbpigmente.

Diesbezüglich wird auf den allgemeinen Stand der Kautschukmischungstechnologie verwiesen.

Wir vorstehend angegeben umfasst das Verfahren zur Herstellung einer profilierten Endlosriemens vorzugsweise weiterhin einen Schritt iii) des Auflegens von einem oder mehreren Zugträgern auf die mit einer Elastomerbeschichtung versehene Textilauflage. Durch den Einbezug von Zugträgern bzw. Zugsträngen, die auch als Cordlage bezeichnet wird, lassen sich entsprechend hergestellte profilierte Endlosriemen verstärken. Alternativ kann der elastische Grundkörper auf der Riemenrückenseite einen Festigkeitsträger in Form von Zugträgern bzw. Zugsträngen und eine Decklage umfassen, wobei in diesem Fall das Verfahren so abgewandelt werden kann, dass der oder die Zugträger auf die Elastomerschicht aufgelegt werden. Insbesondere bevorzugt ist es, wenn mehrere in Längsrichtung verlaufende, parallel angeordnete Zugträger eingesetzt werden. Vorzugsweise bestehen die Zugträger bzw. Zugstränge aus Stahl, Polyamid (PA), Aramid (AR), Polyester (PE), Polyethylenterephthalat (PET), Glasfasern, Kohlefasern, Polyetherketon (PEK), Polyetheretherketon (PEEK), Polyethylen-2,6-naphthalat (PEN) oder Kombinationen davon.

Kommen in dem beschriebenen Verfahren Zugträger zum Einsatz, so sind diese mit einem Mindestabstand zueinander zu legen, damit sichergestellt ist, dass das Elastomer der Elastomerschicht während der Vulkanisation in den Zwischenraum zwischen der mit einer Elastomerbeschichtung versehenen Textilauflage und den Zugträgern fließen kann. Bei einem Verfahren zur Herstellung eines profilierten Endlosriemens werden dabei Leerräume der Vorsprünge (d.h. z.B. die "Zähne") des zu bildenden Profils mit Elastomer gefüllt.

Das Auflegen von Zugträgern erfolgt in der Praxis in der Regel durch aufspulen von einem oder mehreren Zugtägersträngen in Schraubenlinien-förmiger Weise unter Bildung der Cordlage, wobei der oder die Zugträgerstränge an einer Kantenseite einer profilierten Trommel oder Rolle, auf der sich bereits die mindestens zweischichtige Folie und die mit einer Elastomerbeschichtung versehene Textilauflage befindet, auf die Rolle aufgelegt wird und dann der oder die Zugträgerstränge so lange um die Trommel oder Rolle gewickelt wird, bis die Stränge die gegenüberliegenden Kante der Trommel oder Rolle erreichen.

Durch das Aufbringen von Zugträgern oder einer Cordlage wird auf darunterliegende Schichten ein Druck ausgeübt, der das Anhaften von Elastomer auf der Metallform in äußerst ungünstigem Masse erhöht. Entsprechend kommt der haftungsunterdrückende Effekt, der durch die mindestens zweischichtige Folie vermittelt wird, insbesondere in Verfahren vorteilhaft zum Tragen, die einen Schritt iii) beinhalten.

Das angegebene Verfahren umfasst vorzugsweise weiterhin einen Schritt v) des Auflegens einer Textilschicht auf die Elastomerschicht, bevor diese in Schritt vi) vulkanisiert wird. Diese Textilauflage bildet auf der Rückseite (d.h. auf der in der Regel unprofilierten Seite des Endlosriemens) eine die Oberfläche des Riemens verstärkende Schicht, die auch als Rückengewebeschicht bezeichnet wird. Die Schicht wird zweckmäßig aufgebracht, bevor das Elastomer vulkanisiert wird, da in diesem Fall durch das Erweichen und Vulkanisieren des Elastomers eine günstige Anbindung der Textilauflage erreicht und ein weiterer Schritt, wie ein Aufkleben der Textilauflage, entfallen kann.

Bei der Metallform handelt es sich im Kontext des beschriebenen Verfahrens vorzugsweise um eine Stahltrommel und insbesondere um eine gezähnte Stahltrommel.

Das beschriebene Verfahren ist insbesondere zur Herstellung von profilierten Endlosriemen geeignet, aber ohne weiteres für die Herstellung von Elastomerfomteilen anpassbar, die durch Vulkanisieren von Elastomeren unter anpressen an ein Formwerkzeug hergestellt werden. Demzufolge betrifft die vorliegende Erfindung ein Verfahren zur Herstellung eines elastomeren Artikels mit einer äußeren Elastomerschicht umfassend die Schritte:
a) Auflegen einer mindestens zweischichtigen Folie mit einer thermoplastischen Kunststoffschicht und einer polymeren Trennmittelschicht auf eine Metallform, die das Negativ einer zu bildenden Struktur des elastomeren Artikels bildet, in der Weise, dass sich die polymere Trennmittelschicht in Kontakt mit der Metallform befindet;
b) Aufbringen eines Elastomermaterials auf die der Metallform entgegen gerichtete Seite der zweischichtigen Folie;
c) Vulkanisieren der Schichtkonstruktion unter verpressen des Elastomers der Elastomerbeschichtung gegen die Metallform in der Weise, dass die Schichtkonstruktion eine der Metallform angepasste Oberflächenstruktur annimmt;
d) Entnehmen des so hergestellten Artikels aus der Metallform und abtrennen der zweischichtigen Folie von dem Artikel.

Gemäß Anspruch 11 betrifft die vorliegende Erfindung auch ein Verbundprodukt, das einen profilierten Endlosriemen und eine mindestens zweischichtige Folie, die mit einer profilierten Seite des profilierten Endlosriemens verbunden ist, umfasst, wobei das Verbundprodukt nach einem Verfahren hergestellt oder herstellbar ist, wie es im Vorstehenden im Detail beschrieben wurde.

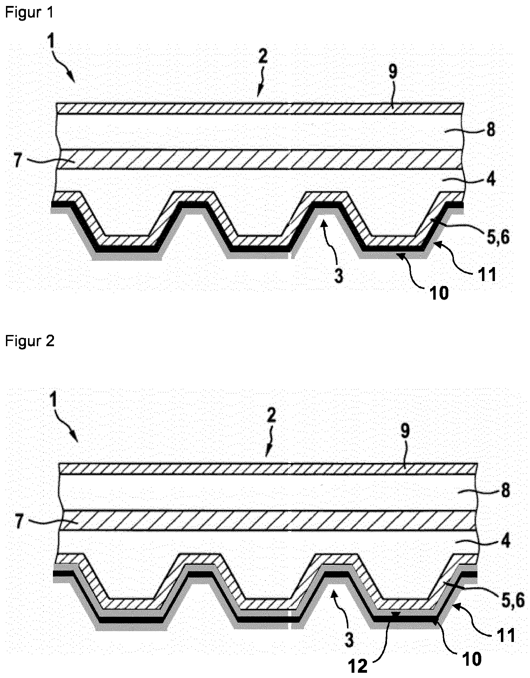

Die Kraftübertragungsseite des profilierten Endlosriemens ist nach Entfernen der mindestens zweischichtigen Folie vorzugsweise so ausgestaltet bzw. ausgebildet, dass sie einen Reibungskoeffizienten von mindestens 0,3 und vorzugswese mindestens 0,6 gegen Stahl, gemessen im ölfreien Zustand, aufweist. Der Reibungskoeffizienten wird hier in Anlehnung an DIN 53375 mit einer Zugprüfmaschine gemäß DIN EN 7500-1 (vgl. Figur 2) und den folgenden Parametern gemessen:
- Reibklotz: Kantenlänge 63 mm
- Untersuchter Zahnriemen: Profil 8m, 6 Zähne, Riemenbreite 12 mm
- Gleitgeschwindigkeit: 100 ± 10 mm/min
- Gleitweg: mindestens 60 mm
- Normalkraft: variabel

Die Reibung wird sowohl für die Zahnköpfe als auch für die Stege zwischen den Zähnen bestimmt. Der vorstehend definierte Reibkoeffizient (vorzugsweise mindestens 0,3 bzw. 0,6) ist der geringere der beiden gemessenen Werte.

Erfindungsgemäß ist die Elastomerbeschichtung auf der Kraftübertragungsseite des profilierten Endlosriemens so ausgestaltet bzw. ausgebildet, dass sie einen Anteil von weniger als 40 phr an Gleitmitteln enthält. Ein Beispiel eines erfindungsgemäßen Verbundprodukts ist zur Illustration in Figur 1 schematisch dargestellt. Diese Figur zeigt einen erfindungsgemäßen Zahnriemen 1 mit einer Riemenrückenseite 2 und einer zahnförmigen Kraftübertragungsseite 3, wobei der Zahnriemen 1 einen elastischen Grundkörper 4 umfasst, der zumindest auf der Kraftübertragungsseite 3 eine Textilauflage 5 aufweist, welche mit einer Elastomerbeschichtung 6 versehen ist. Gemäß bevorzugten Ausführungsformen kann der Zahnriemen ferner einen Zugträger 7, eine Decklage 8 und/oder eine zweite Textilauflage 9 auf der Riemenrückenseite 2 umfassen. Der Zahnriemen weist eine Auflage aus einer zweilagigen Folie auf, die einer untere thermoplastische Kunststoffschicht 10 und eine obere polymere Trennmittelschicht 11 aufweist. In Figur 2 ist schematisch ein entsprechendes Verbundprodukt gezeigt, dass zusätzlich eine weitere polymere Trennmittelschicht 12 zwischen der thermoplastische Kunststoffschicht 10 und der Elastomerbeschichtung 6 aufweist.

Gemäß Anspruch 12 betrifft die vorliegende Erfindung weiterhin die Verwendung einer mindestens zweischichtigen Folie mit einer thermoplastischen Kunststoffschicht und einer polymeren Trennmittelschicht zur Unterdrückung und/oder Vermeidung des Anhaftens von Elastomerformteilen an für deren Herstellung verwendeten Formwerkzeugen, wobei die Folie zwischen Formwerkzeug und zu formendem Elastomer eingebracht und das Elastomer anschließend unter Einschluss der Folie zwischen Formwerkzeug und Elastomer vulkanisiert wird. Die Verwendung kann im Kontext der Herstellung von profilierten Endlosriemen erfolgen, aber auch in anderen Kontexten, wie beispielweise im Kontext von Riemen, z.B. Flachriemen oder Riemen mit anderer als Endlosform mit einer Elastomeroberfläche, oder von Gummielementen, wie Gummidämpfern oder Gummiluftfedern aus den zur Herstellung dieser Elemente verwendeten Metallformen.

In einer bevorzugten Ausführungsform ist die Verwendung so ausgestaltet, dass die mindestens zweischichtige Folie so zwischen Formwerkzeug und zu formendem Elastomer eingebracht wird, dass eine polymere Trennmittelschicht zwischen dem Formwerkzeug und der thermoplastischen Kunststoffschicht der mindestens zweischichtigen Folie positioniert ist.

Für bevorzugte Ausführungsformen der beschriebenen Verbundprodukte und Verwendungen gelten die vorstehend für das erfindungsgemäße Verfahren angegeben bevorzugten Ausgestaltungen analog als bevorzugt und entsprechend offenbart, soweit sich dadurch nicht offensichtliche Widersprüche ergeben.

### Bezugszeichenliste

- 1: Zahnriemen
- 2: Riemenrückseite
- 3: Kraftübertragungsseite
- 4: Grundkörper
- 5: Textilauflage
- 6: Elastomerbeschichtung
- 7: Zugträger
- 8: Decklage
- 9: zweite Textilauflage
- 10: thermoplastische Kunststoffschicht
- 11: äußere polymere Trennmittelschicht
- 12: innere polymere Trennmittelschicht

## Patentansprüche

1. Verfahren zur Herstellung eines elastomeren Artikels mit einer äußeren Elastomerschicht umfassend die Schritte:
a) Auflegen einer mindestens zweischichtigen Folie mit einer thermoplastischen Kunststoffschicht (10) und einer polymeren Trennmittelschicht (11) auf eine Metallform, die das Negativ einer zu bildenden Struktur des elastomeren Artikels bildet, in der Weise, dass sich die polymere Trennmittelschicht (11) in Kontakt mit der Metallform befindet;
b) Aufbringen eines Elastomermaterials auf die der Metallform entgegen gerichtete Seite der zweischichtigen Folie;
c) Vulkanisieren der Schichtkonstruktion unter verpressen des Elastomers der Elastomerbeschichtung (6) gegen die Metallform in der Weise, dass die Schichtkonstruktion eine der Metallform angepasste Oberflächenstruktur annimmt;
d) Entnehmen des so hergestellten Artikels aus der Metallform und abtrennen der zweischichtigen Folie von dem Artikel.

2. Verfahren nach Anspruch 1, wobei das Verfahren ausgestaltet ist als Verfahren zur Herstellung eines profilierten Endlosriemens mit einer Elastomerbeschichtung (6) auf der Innenseite umfassend die Schritte:
i) Auflegen der mindestens zweischichtigen Folie mit einer thermoplastischen Kunststoffschicht (10) und einer polymeren Trennmittelschicht (11) auf eine Metallform, die das Negativ einer zu bildenden profilierten Struktur des Endlosriemens bildet, in der Weise, dass sich die polymere Trennmittelschicht (11) in Kontakt mit der Metallform befindet;
ii) Auflegen einer mit einer Elastomerbeschichtung (6) versehenen Textilauflage (5) auf die zweischichtige Folie in der Weise, dass sich die Elastomerbeschichtung (6) in Kontakt mit der zweischichtigen Folie befindet;
iii) gegebenenfalls, Auflegen von einem oder mehreren Zuträgern (7) auf die mit einer Elastomerbeschichtung (6) versehenen Textilauflage (5);
iv) Aufbringen einer Elastomerschicht auf die mit einer Elastomerbeschichtung (6) versehenen Textilauflage (5) oder auf den oder die Zugträger (7);
v) gegebenenfalls, Auflegen einer Textilschicht auf die Elastomerschicht;
vi) Vulkanisieren der Schichtkonstruktion unter verpressen des Elastomers der Elastomerbeschichtung (6) gegen die Metallform in der Weise, dass die Schichtkonstruktion ein der Metallform angepasstes Profil annimmt;
vii) Entnehmen des so hergestellten Endlosriemens aus der Metallform und abtrennen der zweischichtigen Folie von dem Zahnriemen (1).

3. Verfahren nach Anspruch 2, **dadurch gekennzeichnet, dass** die Schritte i) und ii) simultan durchgeführt werden, indem ein Laminat aus der mindestens zweischichtigen Folie und die mit einer Elastomerbeschichtung (6) versehenen Textilauflage (5) auf die Metallform aufgelegt wird.

4. Verfahren nach einem der Ansprüche 1 bis 3,
**dadurch gekennzeichnet, dass** die thermoplastische Kunststoffschicht (10) eine Dehnfähigkeit im Bereich von 50 bis 90% und bevorzugt im Bereich von 70 bis 90% aufweist.

5. Verfahren nach mindestens einem der vorhergehenden Ansprüche,
**dadurch gekennzeichnet, dass** die thermoplastische Kunststoffschicht (10) der mindestens zweischichtigen Folie auf einem Polyamid und bevorzugt auf Polyamid 6 oder Polyamid 6,6 beruht.

6. Verfahren nach mindestens einem der vorhergehenden Ansprüche,
**dadurch gekennzeichnet, dass** die polymere Trennmittelschicht (11) der mindestens zweischichtigen Folie auf einem fluorhaltigen Polymer und bevorzugt auf Tetrafluorethylen oder einem Copolymer davon beruht.

7. Verfahren nach mindestens einem der vorhergehenden Ansprüche,
**dadurch gekennzeichnet, dass** die mindestens zweischichtige Folie eine Gesamtdicke im Bereich von 15 bis 40 µm und vorzugsweise 20 bis 30 µm aufweist.

8. Verfahren nach mindestens einem der vorhergehenden Ansprüche,
**dadurch gekennzeichnet, dass** als mindestens zweischichtige Folie eine dreischichtige Folie mit einem Aufbau ETFE/Polyamid 6/ ETFE mit einer Dicke im Bereich von 20 bis 30µm verwendet wird.

9. Verfahren nach mindestens einem der vorhergehenden Ansprüche,
**dadurch gekennzeichnet, dass** die mindestens zweischichtige Folie drei Schichten mit einer inneren thermoplastischen Kunststoffschicht (10) und zwei äußeren polymeren Trennmittelschichten (11, 12) aufweist.

10. Verfahren nach Anspruch 2 oder einem davon abhängigen Anspruch,
**dadurch gekennzeichnet, dass** das Elastomer der mit der Elastomerbeschichtung (6) versehenen Textilauflage (5) ausgewählt ist aus der Gruppe umfassend voll- oder teilhydrierten Nitrilkautschuk (HNBR), Acrylatkautschuk (ACM), Ethylen-Acrylatkautschuk (AEM), Polyurethan (PU), Urethanacrylat oder Kombinationen davon, bevorzugt aus voll- oder teilhydrierten Nitrilkautschuk (HNBR), Acrylatkautschuk (ACM) oder einer Kombination davon.

11. Verbundprodukt umfassend einen profilierten Endlosriemen, und eine mindestens zweischichtige Folie, die mit einer Seite des elastomeren Artikels verbunden ist, wobei die Kraftübertragungsseite des profilierten Endlosriemens nach Entfernen der mindestens zweischichtigen Folie einen Reibungskoeffizienten von mindestens 0,3 und vorzugswese mindestens 0,6 gegen Stahl, gemessen im ölfreien Zustand, aufweist und/oder dass die Elastomerbeschichtung (6) einen Anteil von weniger als 40 phr an Gleitmitteln enthält, hergestellt oder herstellbar nach einem Verfahren gemäß einem der Ansprüche 1 bis 10.

12. Verwendung einer mindestens zweischichtigen Folie mit einer thermoplastischen Kunststoffschicht (10) und einer polymeren Trennmittelschicht (11) zur Unterdrückung und/oder Vermeidung des Anhaftens von Elastomerformteilen an für deren Herstellung verwendeten Formwerkzeugen, wobei die Folie zwischen Formwerkzeug und zu formendem Elastomer eingebracht und das Elastomer anschließend unter Einschluss der Folie zwischen Formwerkzeug und Elastomer vulkanisiert wird.

13. Verwendung nach Anspruch 12, **dadurch gekennzeichnet, dass** die mindestens zweischichtige Folie so zwischen Formwerkzeug und zu formendem Elastomer eingebracht wird, dass eine polymere Trennmittelschicht (11) zwischen dem Formwerkzeug und der thermoplastischen Kunststoffschicht (10) der mindestens zweischichtigen Folie positioniert ist.

## Claims

1. Method for producing an elastomeric article with an outer elastomer layer includes the following steps:
a) Placing a film of at least two layers containing a thermoplastic layer (10) and a polymeric release agent layer (11) on a metal mold forming the negative of a structure to be formed of the elastomeric article in such a way that the polymer release agent layer (11) is in contact with the metal mold;
b) Applying an elastomer material to the side of the two-layer film facing the metal mold;
c) Vulcanization of the layer structure by pressing the elastomer of the elastomer of the elastomer coating (6) against the metal mold in such a way that the layer structure assumes a surface structure adapted to the metal shape;
d) Remove the article produced in this way from the metal mould and separate the two-layer film from the article.

2. The method according to claim 1, wherein the method is designed as a method for the production of a profiled endless belt with an elastomer coating (6) on the inside comprising the steps:
i) Placing the film of at least two layers with a thermoplastic layer (10) and a polymeric release agent layer (11) on a metal mold forming the negative of a profiled structure of the endless belt to be formed, in such a way that the polymer release agent layer (11) is in contact with the metal mold;
ii) Placing a textile pad (5) with an elastomer coating (6) on the two-layer film in such a way that the elastomer coating (6) is in contact with the two-layer film;
iii) if necessary, placing one or more feeders (7) on the textile pad (5) provided with an elastomer coating (6);
iv) Application of an elastomer layer to the textile pad (5) provided with an elastomer coating (6) or to the tension member(s) (7);
v) if necessary, apply a textile layer to the elastomer layer;
vi) Vulcanization of the layer structure by pressing the elastomer of the elastomer of the elastomer coating (6) against the metal mold in such a way that the layer structure assumes a profile adapted to the metal shape;
vii) Remove the endless belt produced in this way from the metal mould and separate the two-layer film from the timing belt (1).

3. A method according to claim 2, i.e. steps (i) and (ii) are carried out simultaneously by placing a laminate consisting of the foil of at least two layers and the textile pad (5) provided with an elastomer coating (6) on the metal mould.

4. A method according to any one of claims 1 to 3, i.e. the thermoplastic layer (10) has an elasticity in the range of 50 to 90% and preferably in the range of 70 to 90%.

5. A method according to at least one of the preceding claims, i.e. that the thermoplastic layer (10) of the at least two-layer film is based on a polyamide and preferably on polyamide 6 or polyamide 6,6.

6. A method according to at least one of the preceding claims, i.e. that the polymeric release agent layer (11) of the film of at least two layers is based on a fluorine-containing polymer and preferably on tetrafluoroethylene or a copolymer thereof.

7. A method according to at least one of the preceding claims, i.e. that the film of at least two layers has a total thickness in the range of 15 to 40 µm and preferably 20 to 30 µm.

8. A method according to at least one of the preceding claims, i.e. that a three-layer film with a structure ETFE/polyamide 6/ETFE with a thickness in the range of 20 to 30µm is used as at least a two-layer film.

9. A method according to at least one of the preceding claims, i.e. that the film having at least two layers having three layers having an inner thermoplastic layer (10) and two outer polymer release agent layers (11, 12).

10. The method of claim 2 or a dependent claim, i.e. the elastomer of the textile pad (5) provided with the elastomer coating (6) is selected from the group of fully or partially hydrogenated nitrile rubber (HNBR), acrylic rubber (ACM), ethylene-acrylate rubber (AEM), Polyurethane (PU), urethane acrylate or combinations thereof, preferably of fully or partially hydrogenated nitrile rubber (HNBR), acrylic rubber (ACM) or a combination thereof.

11. composite product comprising a profiled endless belt, and a film of at least two layers bonded to one side of the elastomeric article, wherein the power transmission side of the profiled endless belt, after removal of the at least two-layer film, has a coefficient of friction of at least 0,3 and preferably at least 0,6 against steel measured in the oil-free state, and/or that the elastomer coating (6) has a proportion of less than 40 phr of Lubricants contains, manufactured or can be manufactured by a process according to any one of claims 1 to 10.

12. Use of a film of at least two layers having a thermoplastic layer (10) and a polymeric release agent layer (11) to suppress and/or prevent adhesion of elastomer molded parts to molds used for their manufacture, wherein the film is inserted between the mold and the elastomer to be molded and the elastomer is then vulcanized with the inclusion of the film between the mold and the elastomer.

13. The use according to claim 12, **characterized by** the film of at least two layers is introduced between the forming tool and the elastomer to be formed in such a way that a polymeric release agent layer (11) is positioned between the forming tool and the thermoplastic layer (10) of the at least two-layer film.

## Revendications

1. Le procédé de production d'un article élastomère avec une couche externe d'élastomère comprend les étapes suivantes :
a) Placer un film d'au moins deux couches contenant une couche thermoplastique (10) et une couche d'agent de démoulage polymère (11) sur un moule métallique formant le négatif d'une structure à former de l'article élastomère de telle sorte que la couche d'agent de démoulage polymère (11) soit en contact avec le moule métallique ;
b) Application d'un matériau élastomère sur le côté du film bicouche faisant face au moule métallique ;
c) Vulcanisation de la structure de la couche en pressant l'élastomère de l'élastomère du revêtement élastomère (6) contre le moule métallique de telle sorte que la structure de la couche assume une structure de surface adaptée à la forme du métal ;
d) Retirez l'article ainsi produit du moule métallique et séparez le film à deux couches de l'article.

2. Procédé selon la revendication 1, dans lequel le procédé est conçu comme un procédé pour la production d'une courroie sans fin profilée avec un revêtement élastomère (6) à l'intérieur, comprenant les étapes :
i) Placer le film d'au moins deux couches avec une couche thermoplastique (10) et une couche d'agent de démoulage polymère (11) sur un moule métallique formant le négatif d'une structure profilée de la bande sans fin à former, de telle sorte que la couche d'agent de démoulage polymère (11) soit en contact avec le moule métallique ;
ii) Placer un tampon textile (5) avec un revêtement élastomère (6) sur le film à deux couches de telle manière que le revêtement élastomère (6) soit en contact avec le film à deux couches ;
iii) si nécessaire, en plaçant un ou plusieurs alimentateurs (7) sur le tampon textile (5) pourvu d'un revêtement élastomère (6) ;
iv) Application d'une couche d'élastomère sur le tampon textile (5) pourvu d'un revêtement en élastomère (6) ou sur le ou les éléments de tension (7) ;
v) si nécessaire, appliquer une couche textile sur la couche d'élastomère ;
vi) Vulcanisation de la structure de la couche en pressant l'élastomère de l'élastomère du revêtement élastomère (6) contre le moule métallique de telle sorte que la structure de la couche adopte un profil adapté à la forme du métal ;
vii) Retirez la courroie sans fin ainsi produite du moule métallique et séparez le film bicouche de la courroie dentée (1).

3. Procédé selon la revendication 2, c'est-à-dire que les étapes (i) et (ii) sont réalisées simultanément en plaçant un stratifié composé d'une feuille d'au moins deux couches et du tampon textile (5) pourvu d'un revêtement élastomère (6) sur le moule métallique.

4. Procédé selon l'une quelconque des revendications 1 à 3, c'est-à-dire que la couche thermoplastique (10) a une élasticité de l'ordre de 50 à 90 % et de préférence de l'ordre de 70 à 90 %.

5. Procédé selon au moins l'une des revendications précédentes, c'est-à-dire que la couche thermoplastique (10) du film au moins deux couches est à base d'un polyamide et de préférence de polyamide 6 ou de polyamide 6,6.

6. Procédé selon au moins l'une des revendications précédentes, c'est-à-dire que la couche d'agent de démoulage polymère (11) du film d'au moins deux couches est basée sur un polymère contenant du fluor et de préférence sur du tétrafluoroéthylène ou un copolymère de celui-ci.

7. Procédé selon au moins l'une des revendications précédentes, c'est-à-dire que le film d'au moins deux couches a une épaisseur totale de l'ordre de 15 à 40 µm et de préférence de 20 à 30 µm.

8. Procédé selon au moins l'une des revendications précédentes, c'est-à-dire qu'un film à trois couches avec une structure ETFE/polyamide 6/ETFE d'une épaisseur comprise entre 20 et 30µm est utilisé comme un film à au moins deux couches.

9. Procédé selon au moins l'une des revendications précédentes, c'est-à-dire que le film comportant au moins deux couches ayant trois couches ayant une couche thermoplastique interne (10) et deux couches externes d'agent de démoulage polymère (11, 12).

10. Procédé selon la revendication 2 ou une revendication dépendante, c'est-à-dire que l'élastomère du tampon textile (5) pourvu du revêtement élastomère (6) est choisi dans le groupe du caoutchouc nitrile entièrement ou partiellement hydrogéné (HNBR), du caoutchouc acrylique (ACM), du caoutchouc éthylène-acrylate (AEM), Polyuréthane (PU), acrylate d'uréthane ou combinaison de ceux-ci, de préférence de caoutchouc nitrile entièrement ou partiellement hydrogéné (HNBR), de caoutchouc acrylique (ACM) ou d'une combinaison de ceux-ci.

11. Produit composite comprenant une courroie sans fin profilée et un film d'au moins deux couches collées sur un côté de l'article en élastomère, dans lequel le côté transmission de puissance de la courroie sans fin profilée, après enlèvement de la pellicule à deux couches au moins, a un coefficient de frottement d'au moins 0,3 et de préférence d'au moins 0,6 contre l'acier mesuré à l'état sans huile, et/ou que le revêtement élastomère (6) a une proportion inférieure à 40 phr de Les lubrifiants contiennent, fabriquent ou peuvent être fabriqués par un procédé selon l'une quelconque des revendications 1 à 10.

12. Utilisation d'un film d'au moins deux couches ayant une couche thermoplastique (10) et une couche d'agent de démoulage polymère (11) pour supprimer et/ou empêcher l'adhérence des pièces moulées en élastomère sur les moules utilisés pour leur fabrication, dans lequel le film est inséré entre le moule et l'élastomère à mouler et l'élastomère est ensuite vulcanisé avec l'inclusion du film entre le moule et l'élastomère.

13. L'utilisation selon la revendication 12, **caractérisé par** cette que le film d'au moins deux couches est introduit entre l'outil de formage et l'élastomère à former de telle manière qu'une couche d'agent de démoulage polymère (11) soit positionnée entre l'outil de formage et la couche thermoplastique (10) du film au moins deux couches.
